(19) Europäisches Patentamt
European Patent Office
Office européen des brevets

(11) Veröffentlichungsnummer: **0 305 837 B1**

(12) **EUROPÄISCHE PATENTSCHRIFT**

(45) Veröffentlichungstag der Patentschrift: **18.03.92**

(51) Int. Cl.[5]: **C07F 9/547**, A01N 57/24

(21) Anmeldenummer: **88113590.9**

(22) Anmeldetag: **22.08.88**

# (54) Thionophosphonsäureester.

(30) Priorität: **02.09.87 DE 3729263**

(43) Veröffentlichungstag der Anmeldung:
**08.03.89 Patentblatt 89/10**

(45) Bekanntmachung des Hinweises auf die Patenterteilung:
**18.03.92 Patentblatt 92/12**

(84) Benannte Vertragsstaaten:
**AT BE CH DE ES FR GB IT LI NL**

(56) Entgegenhaltungen:
**EP-A- 0 012 320**
**DE-A- 2 639 433**
**DE-B- 1 140 580**

(73) Patentinhaber: **BAYER AG**
**W-5090 Leverkusen 1 Bayerwerk(DE)**

(72) Erfinder: **Maurer, Fritz, Dr.**
**Roeberstrasse 8**
**W-5600 Wuppertal 1(DE)**
Erfinder: **Homeyer, Bernhard, Dr.**
**Obere Strasse 28**
**W-5090 Leverkusen 3(DE)**
Erfinder: **Behrenz, Wolfgang, Dr.**
**Untergründemich 14**
**W-5063 Overath(DE)**

**EP 0 305 837 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue O-(6-Methyl-2-alkyl-pyrimidin-4-yl)-O-alkyl-thionoalkanphosphonsäure-diester, ein Verfahren zu ihrer Herstellung sowie ihre Verwendung als Schädlingsbekämpfungsmittel, vorzugsweise als Insektizide.

Es ist bereits bekannt, daß bestimmte O-(2,6-Dialkyl-pyrimidin-4-yl)-O-alkyl-thionoalkanphosphonsäure-diester, wie z. B. O-(2-Methyl-6-tert-butyl-pyrimidin-4-yl)-O-ethyl-thionomethanphosphonsäure-diester und O-(2,6-Dimethyl-pyrimidin-4-yl)-O-methyl-thiono-ethanphosphonsäure-diester, zur Bekämpfung von Insekten geeignet sind (vgl. DE-OS 11 40 580 und DE-OS 26 39 433). Die insektizide Wirkung dieser bekannten Verbindungen ist jedoch, insbesondere bei niedrigen Aufwandmengen bzw. Wirkstoffkonzentrationen und bezüglich der Wirkungsdauer, nicht immer zufriedenstellend.

Es wurden nun die neuen O-(6-Methyl-2-alkyl-pyrimidin-4-yl)-O-alkyl-thionoalkanphosphonsäure-diester der allgemeinen Formel (I)

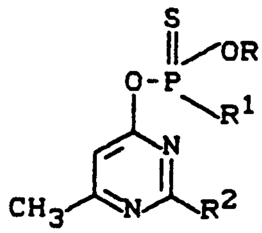

(I)

in welcher

R für Methyl oder Ethyl,
$R^1$ für Methyl oder Ethyl und
$R^2$ für Isopropyl oder tert-Butyl steht,

gefunden.

Weiter wurde gefunden, daß man die neuen O-(6-Methyl-2-alkyl-pyrimidin-4-yl)-O-alkyl-thionoalkanphosphonsäure-diester der Formel (I) erhält,
wenn man
6-Methyl-2-alkyl-4-hydroxy-pyrimidine der allgemeinen Formel (II)

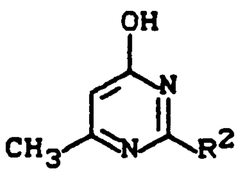

(II)

in welcher

$R^2$ die oben angegebene Bedeutung hat, oder ihre Alkalimetall-, Erdalkalimetall- oder Ammoniumsalze,

mit Thionoalkanphosphonsäure-chlorid-alkylestern der Formel (III)

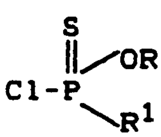

(III)

in welcher

R und $R^1$ die oben angegebene Bedeutung haben,

gegebenenfalls in Gegenwart eines Säureakzeptors und gegebenenfalls in Gegenwart eines Verdünnungsmittels umsetzt.

Schließlich wurde gefunden, daß sich die neuen O-(6-Methyl-2-alkyl-pyrimidin-4-yl)-O-alkyl-thionoalkanphosphonsäure-diester der Formel (I) durch sehr starke arthropodizide, insbesondere insektizide

Wirksamkeit auszeichnen.

Die neuen Verbindungen der Formel (I) zeigen insbesondere eine überragende Wirkung gegen Orthoptera, wie z. B. Blattella germanica und Coleoptera, wie z. B. Sitophilus granarius. Auch gegen Bodeninsekten (also Insekten, die im oder am Boden oder in Bodennähe vorkommen), wie z. B. Phorbia-antiqua-Maden und Diabrotica-balteata-Larven, zeigen die erfindungsgemäßen Wirkstoffe herausragende Wirkung.

Überraschenderweise zeigen die erfindungsgemäßen O-(6-Methyl-2-alkyl-pyrimidin-4-yl)-O-alkyl-thionoalkanphosphonsäure-diester der Formel (I) erheblich stärkere insektizide Wirkung als die oben erwähnten O-(2,6-Dialkyl-pyrimidin-4-yl)-O-alkyl-thionoalkanphosphonsäure-diester. Die erfindungsgemäßen Stoffe stellen somit eine wertvolle Bereicherung der Technik dar.

Als besonders wichtige Verbindungen der Formel (I) seien genannt:

O-(6-Methyl-2-tert-butyl-pyrimidin-4-yl)-O-methyl-thionoethanphosphonsäure-diester und O-(6-Methyl-2-isopropyl-pyrimidin-4-yl)-O-methyl-thionoethanphosphonsäure-diester.

Verwendet man beispielsweise 6-Methyl-2-tert-butyl-4-hydroxy-pyrimidin und Thionoethanphosphonsäure-chlorid-methylester als Ausgangsstoffe, so kann der Reaktionsablauf durch das folgende Formelschema wiedergegeben werden:

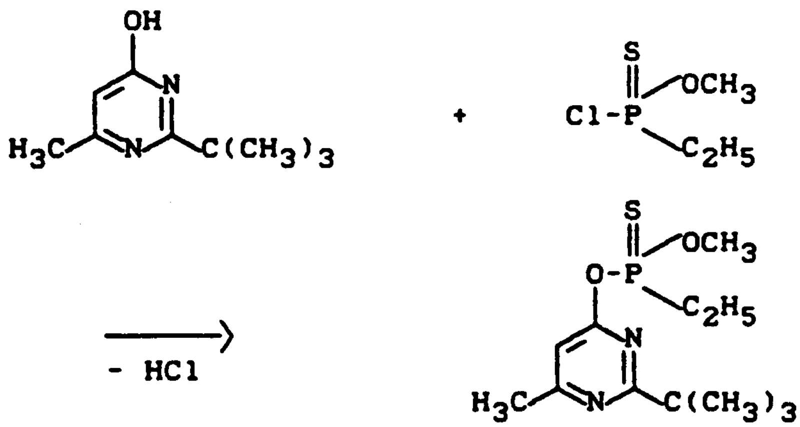


Die als Ausgangsstoffe zu verwendenden 6-Methyl-2-alkyl-4-hydroxy-pyrimidine sind durch die Formel (II) definiert. Als Alkali- oder Erdalkalimetallsalze (die beim erfindungsgemäßen Verfahren bevorzugt werden) werden vorzugsweise die Natrium-, Kalium- oder Calciumsalze eingesetzt.

Als Beispiele seien 6-Methyl-2-tert-butyl-4-hydroxy-pyrimidin und 6-Methyl-2-isopropyl-4-hydroxy-pyrimidin genannt.

Die 6-Methyl-2-alkyl-4-hydroxy-pyrimidine der Formel (II) sind bekannt (vgl. DE-OS 20 65 698 bzw. J. Chem. Soc. (London) 1963, S. 5652).

Die weiter als Ausgangsstoff zu verwendenden Thionoalkanphosphonsäure-chlorid-alkylester der Formel (III) sind bereits bekannt (vgl. DE-OS 10 78 124, GB-PS 1 450 284 und DE-OS 29 20 172).

Das erfindungsgemäße Verfahren zur Herstellung der neuen Verbindungen der Formel (I) wird vorzugsweise unter Verwendung von Verdünnungsmitteln und Säureakzeptoren durchgeführt.

Als Verdünnungsmittel kommen dabei praktisch alle inerten organischen Lösungsmittel in Frage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäuremethylester und -ethylester, Nitrile wie z. B. Acetonitril und Propionitril, Amide wie z. B. Dimethyl wie z. B. Dimethylformamid, Dimethylacetamid und N-Methyl-pyrrolidon sowie Dimethylsulfoxid, Tetramethylensulfon und Hexamethylphosphorsäuretriamid.

Als Säureakzeptoren können bei dem erfindungsgemäßen Verfahren alle üblicherweise für derartige Umsetzungen verwendbaren Säurebindemittel eingesetzt werden. Vorzugsweise in Frage kommen Alkalimetallhydroxide wie z. B. Natrium- und Kaliumhydroxid, Erdalkalihydroxide wie z. B. Calciumhydroxid, Alkalicarbonate und -alkoholate wie Natrium- und Kaliumcarbonat, Natrium- und Kalium-tert-butylat, ferner aliphatische, aromatische oder heterocyclische Amine, beispielsweise Triethylamin, Trimethylamin, Dimethylanilin, Dimethylbenzylamin, Pyridin, 1,5-Diazabicyclo-[4,3,0]-non-5-en (DBN), 1,8-Diazabicyclo-[5,4,0]-undec-7-en (DBU) und 1,4-Diazabicyclo-[2,2,2]-octan (DABCO).

Die Reaktionstemperaturen können bei dem erfindungsgemäßen Verfahren in einem größeren Bereich variiert werden. Im allgemeinen arbeitet man bei Temperaturen zwischen 0 °C und 100 °C, vorzugsweise bei Temperaturen zwischen 10 °C und 80 °C.

Das erfindungsgemäße Verfahren wird im allgemeinen unter Normaldruck durchgeführt. Es ist jedoch auch möglich, unter erhöhtem oder vermindertem Druck zu arbeiten.

Zur Durchführung des erfindungsgemäßen Verfahrens setzt man die Ausgangsstoffe der Formeln (II) und (III) im allgemeinen in angenähert äquimolaren Mengen ein. Ein Überschuß der einen oder anderen Komponente bis etwa 10 % ist jedoch problemlos möglich.

Die Reaktionskomponenten werden im allgemeinen in einem der oben angegebenen Lösungsmittel zusammengegeben und und mehrere Stunden gerührt, wobei die Temperatur im oben angegebenen Rahmen gehalten wird.

Zur der nach üblichen Methoden erfolgenden Aufarbeitung wird eingeengt, der Rückstand in einem mit Wasser praktisch nicht mischbaren Lösungsmittel, wie z. B. Toluol, aufgenommen, mit Wasser gewaschen und mit einem üblichen Trockenmittel, wie z. B. Natriumsulfat, getrocknet. Nach Filtration wird vom Filtrat das Lösungsmittel im Wasserstrahlvakuum abdestilliert.

Die neuen Verbindungen fallen in Form von Ölen an, die sich zum Teil nicht unzersetzt destillieren lassen, jedoch durch sogenanntes "Andestillieren", d. h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..
Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe zeichnen sich durch eine hervorragende insektizide Wirksamkeit, insbesondere bei der Bekämpfung von Orthoptera-Arten, wie z. B. Blattella germanica und Coleoptera-Arten, wie z. B. Sitophilus granarius, aus.

Die erfindungsgemäßen Wirkstoffe können wegen ihrer hohen Stabilität auch sehr gut zur Bekämpfung von Bodeninsekten, wie z. B. Phorbia-antiqua-Maden und Diabrotica-balteata-Larven, eingesetzt werden.

Einige der erfindungsgemäßen Wirkstoffe zeigen auch blattinsektizide Wirkung.

Besonders bevorzugt werden insbesondere die folgenden erfindungsgemäßen Verbindungen der Formel (I):
O-(6-Methyl-2-tert-butyl-pyrimidin-4-yl)-O-methyl-thionoethanphosphonsäure-diester und O-(6-Methyl-2-isopropyl-pyrimidin-4-yl)-O-methyl-thionoethanphosphonsäure-diester.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und

Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Herstellung und die Verwendung der erfindungsgemäßen Wirkstoffe wird durch die folgenden Beispiele erläutert.

## Herstellungsbeispiele

### Beispiel 1

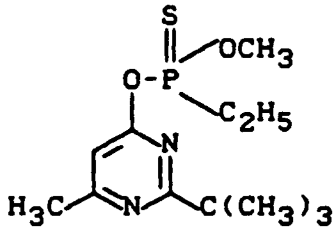

15,85 g (0,1 Mol) Thionoethanphosphonsäurechlorid-methylester werden bei 20 °C unter Rühren zu einer Mischung aus 16,6 g (0,1 Mol) 6-Methyl-2-tert-butyl-4-hydroxy-pyrimidin, 20,7 g (0,15 Mol) Kaliumcarbonat und 200 ml Acetonitril gegeben und die Mischung wird ca. 15 Stunden bei 20 °C gerührt. Nach dem Einengen wird der Rückstand in 100 ml Toluol aufgenommen, zweimal mit je 100 ml Wasser gewaschen, mit Natriumsulfat getrocknet und filtriert. Vom Filtrat wird das Lösungsmittel unter vermindertem Druck bei ca. 50 °C abdestilliert.

Man erhält 26,2 g (91 % der Theorie) O-(6-Methyl-2-tert-butyl-pyrimidin-4-yl)-O-methyl-thionoethanphosphonsäure-diester als öligen Rückstand vom Brechungsindex $n_D^{21}$ = 1,5172.

Analog Beispiel 1 und entsprechend der allgemeinen Beschreibung des erfindungsgemäßen Herstellungsverfahrens können die in der nachstehenden Tabelle aufgeführten Verbindungen der Formel (I) hergestellt werden.

**Tabelle**

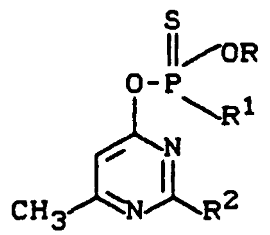

(I)

| Beisp.-Nr. | R | $R^1$ | $R^2$ | Brechungsindex |
|---|---|---|---|---|
| 2 | $CH_3$ | $C_2H_5$ | $C_3H_7$-i | $n_D^{22}$ = 1,5205 |
| 3 | $CH_3$ | $CH_3$ | $C_4H_9$-t | |
| 4 | $C_2H_5$ | $C_2H_5$ | $C_4H_9$-t | |
| 5 | $C_2H_5$ | $CH_3$ | $C_4H_9$-t | |

Verwendungsbeispiele

In einigen der nachfolgenden Verwendungsbeispielen wurden die nachstehend angegebenen Verbindungen als Vergleichsverbindungen eingesetzt:

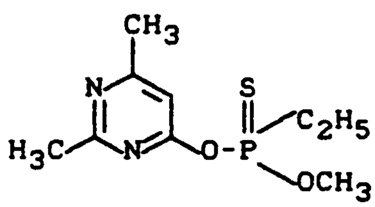

(A)

(DE-OS 11 40 580, Beispiel 11)

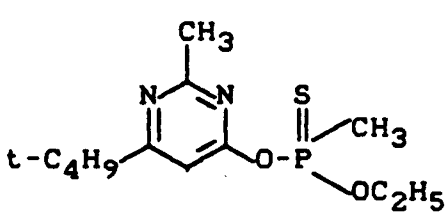

(B)

(DE-OS 26 39 433, Beispiel 3)

Beispiel A

$LD_{100}$-Test

Testtiere: Blatella germanica
Zahl der Testiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.
2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.
Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.
Bei diesem Test zeigten die Verbindungen der Beispiele (1) und (2) bei einer beispielhaften Konzentration von 0,002 % einen Abtötungsgrad von 100 %, während bei der gleichen Konzentration die Vergleichssubstanzen (A) und (b) keine Abtötung (0 %) ergaben.

Beispiel B

$LD_{100}$-Test
Testtiere: Sitophilus granarius
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.
2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.
Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.
Bei diesem Test zeigten die Verbindungen der Beispiele (1) und (2) bei einer beispielhaften Konzentration von 0,002 % einen Abtötungsgrad von 100 %, während bei der gleichen Konzentration die Vergleichssubstanzen (A) und (B) keine Abtötung (0 %) ergaben.

Beispiel C

Grenzkonzentrations-Test / Bodeninsekten
Testinsekt: Phorbia antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.
Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.
Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten die Verbindungen der Beispiele (1) und (2) bei einer beispielhaften Konzentration von 5 ppm einen Abtötungsgrad von 100 %, während bei der gleichen Konzentration die Vergleichsverbindung (A) keine Abtötung (0 %) ergab.

Beispiel D

Grenzkonzentrations-Test / Bodeninsekten
Testinsekt: Diabrotica balteata - Larven im Boden
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration. Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in 0,5-1-Töpfe und läßt diese bei 20 °C stehen. Sofort nach dem Ansatz werden je Topft 6 vorgekeimte Maiskörner gelegt. Nach 2 Tagen werden in den behandelten Boden die entsprechenden Testinsekten gesetzt. Nach weiteren 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle. Bei diesem Test zeigten die Verbindungen der Beispiele (1) und (2) bei einer beispielhaften Konzentration von 5 ppm einen Abtötungsgrad von 100 %, während bei der gleichen Konzentration die Vergleichsverbindung (A) keine Abtötung (0 %) ergab.

## Patentansprüche

**1.** O-(6-Methyl-2-alkyl-pyrimidin-4-yl)-O-alkyl-thionoalkanphosphonsäure-diester der allgemeinen Formel (I)

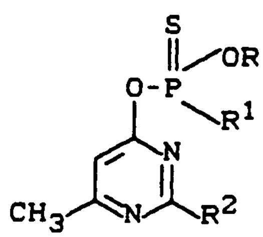

(I)

in welcher
- R für Methyl oder Ethyl,
- $R^1$ für Methyl oder Ethyl und
- $R^2$ für Isopropyl oder tert-Butyl steht.

**2.** Verbindung der Formel

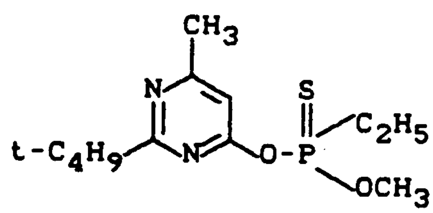

.

**3.** Verbindung der Formel

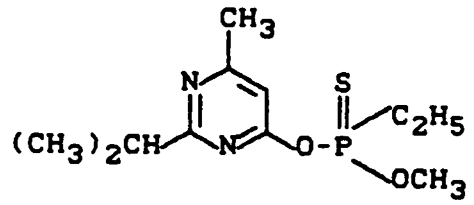

4. Verfahren zur Herstellung der O-(6-Methyl-2-alkyl-pyrimidin-4-yl)-O-alkyl-thionoalkanphosphonsäure-diester der Formel (I)

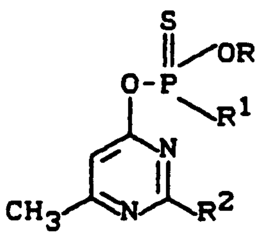

(I)

in welcher
R für Methyl oder Ethyl,
$R^1$ für Methyl oder Ethyl und
$R^2$ für Isopropyl oder tert-Butyl steht,
dadurch gekennzeichnet, daß man
6-Methyl-2-alkyl-4-hydroxy-pyrimidine der allgemeinen Formel (II)

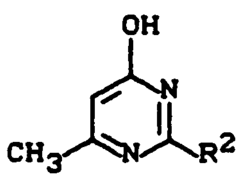

(II)

in welcher
$R^2$ die oben angegebene Bedeutung hat, oder ihre Alkalimetall-, Erdalkalimetall- oder Ammoniumsalze,
mit Thionoalkanphosphonsäure-chlorid-alkylestern der Formel (III)

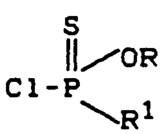

(III)

in welcher
R und $R^1$ die oben angegebene Bedeutung haben,
gegebenenfalls in Gegenwart eines Säureakzeptors und gegebenenfalls in Gegenwart eines Verdünnungsmittels umsetzt.

5. Verwendung von O-(6-Methyl-2-alkyl-pyrimidin-4-yl)-O-alkyl-thionoalkanphosphonsäure-diestern der Formel (I) gemäß den Ansprüchen 1 oder 4 als Athropodizide.

6. Insektizide und akarizide Mittel, gekennzeichnet durch einen Gehalt an O-(6-Methyl-2-alkyl-pyrimidin-4-yl)-O-alkyl-thionoalkanphosphonsäure-diestern der Formel I gemäß den Ansprüchen 1 oder 4.

7. Verfahren zur Bekämpfung von schädigenden Arthropoden, dadurch gekennzeichnet, daß man sie oder

ihren Lebensraum mit O-(6-Methyl-2-alkyl-pyrimidin-4-yl)-O-alkyl-thionoalkanphosphonsäure-diestern der Formel I gemäß den Ansprüchen 1 oder 4 behandelt.

**8.** Verfahren zur Herstellung arthropodizider Mittel, dadurch gekennzeichnet, daß man O-(6-Methyl-2-alkyl-pyrimidin-4-yl)-O-alkyl-thionoalkanphosphonsäure-diester der Formel I gemäß den Ansprüchen 1 oder 4 mit Streck- oder Verdünnungsmitteln vermischt.

**Claims**

**1.** O-(6-Methyl-2-alkyl-pyrimidin-4-yl) O-alkyl thionoalkanephosphonates of the general formula (I)

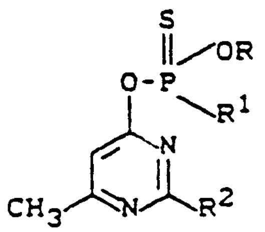

(I)

in which

R represents methyl or ethyl,

$R^1$ represents methyl or ethyl and

$R^2$ represents isopropyl or tert-butyl.

**2.** Compound of the formula

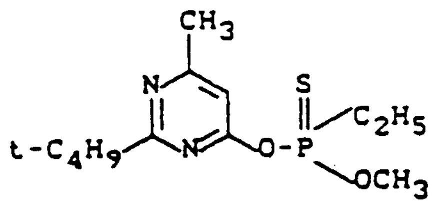

**3.** Compound of the formula

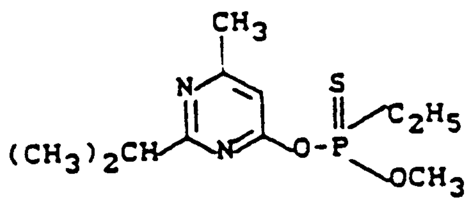

**4.** Process for the preparation of the O-(6-methyl-2-alkylpyrimidin-4-yl) O-alkyl thionoalkanephosphonate of the formula (I)

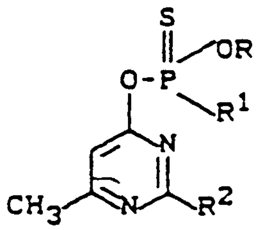

(I)

in which

R represents methyl or ethyl,

$R^1$ represents methyl or ethyl and

$R^2$ represents isopropyl or tert-butyl,

characterised in that

6-methyl-2-alkyl-4-hydroxy-pyrimidines of the general formula (II)

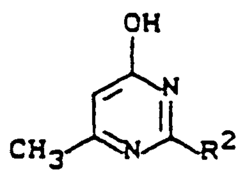

(II)

in which

$R^2$ has the abovementioned meaning, or their alkali metal, alkaline earth metal or ammonium salts, are reacted with O-alkyl chlorothionoalkanephosphonates of the formula (III)

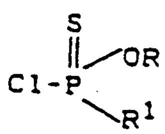

(III)

in which

R and $R^1$ have the abovementioned meaning,

if appropriate in the presence of an acid-acceptor and if appropriate in the presence of a diluent.

5. Use of O-(6-methyl-2-alkyl-pyrimidin-4-yl) O-alkyl thionoalkanephosphonates of the formula (I) according to Claims 1 or 4 as arthropodicides.

6. Insecticidal and acaricidal agents, characterised in that they contain O-(6-methyl-2-alkyl-pyrimidin-4-yl) O-alkyl thionoalkanephosphonates of the formula I according to Claims 1 or 4.

7. Method for combating harmful arthropods, characterised in that they or their environment are treated with O-(6-methyl-2-alkyl-pyrimidin-4-yl) O-alkyl thionoalkanephosphonates of the formula I according to Claims 1 or 4.

8. Process for the production of arthropodicidal agents, characterised in that O-(6-methyl-2-alkyl-pyrimidin-4-yl) O-alkyl thionoalkanephosphonates of the formula I according to Claims 1 or 4 are mixed with extenders or diluents.

**Revendications**

1. Diesters thionoalcanephosphonates de O-(6-méthyl-2-alkyl-pyrimidine-4-yle)-O-alkyle de formule générale (I)

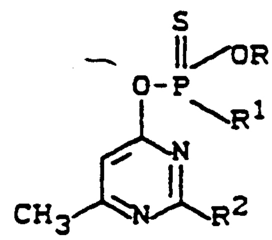

dans laquelle

R signifie méthyle ou éthyle,

$R^1$ signifie méthyle ou éthyle et

$R^2$ signifie isopropyle ou tert-butyle.

**2.** Composé de formule

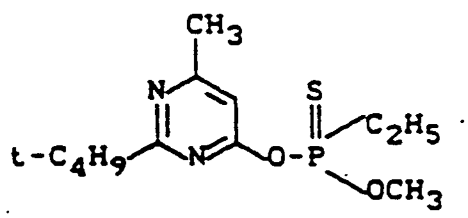

**3.** Composé de formule

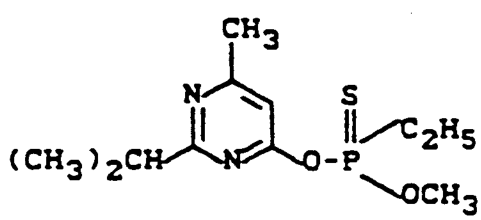

**4.** Procédé pour la fabrication de diesters thionoalcanephosphonates de O-(6-méthyl-2-alkyl-pyrimidine-4-yle)-O-alkyle de formule générale (I)

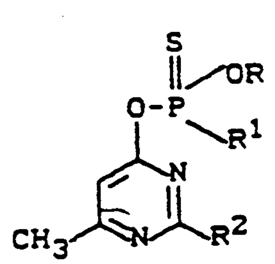

dans laquelle

R signifie méthyle ou éthyle,

$R^1$ signifie méthyle ou éthyle et

$R^2$ signifie isopropyle ou tert-butyle,

caractérisé en ce que l'on fait réagir des 6-méthyl-2-alkyl-4-hydroxy-pyrimidines de formule générale (II)

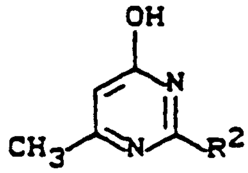

dans laquelle

$R^2$ possède la signification décrite ci-dessus ou représente ses sels de métaux alcalins, de métaux alcalino-terreux ou d'ammonium,

avec des chlorures de thionoalcanephosphonates d'alkyle de formule (III)

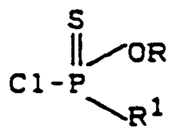

dans laquelle

R et $R^1$ possèdent les significations décrites ci-dessus, éventuellement en présence d'un accepteur d'acide et éventuellement en présence d'un diluant.

**5.** Utilisation des diesters thionoalcanephosphonates de O-(6-méthyl-2-alkyl-pyrimidine-4-yle)-O-alkyle de formule (I) selon les revendications 1 ou 4 comme arthropodicides.

**6.** Agent insecticide et acaricide, caractérisé en ce qu'il contient des diesters thionoalcanephosphonates de O-(6-méthyl-2-alkyl-pyrimidine-4-yle)-O-alkyle de formule (I) selon les revendications 1 ou 4.

**7.** Procédé pour la lutte contre les arthropodes nuisibles, caractérisé en ce qu'on traite ces derniers ou leur habitat avec des diesters thionoalcanephosphonates de O-(6-méthyl-2-alkyl-pyrimidine-4-yle)-O-alkyle de formule (I) selon les revendications 1 ou 4.

**8.** Procédé pour la fabrication d'agents arthropodicides, caractérisé en ce qu'on mélange des diesters thionoalcanephosphonates de O-(6-méthyl-2-alkyl-pyrimidine-4-yle)-O-alkyle de formule (I) selon les revendications 1 ou 4 avec des agents d'allongement ou de dilution.